(19) Europäisches Patentamt
European Patent Office
Office européen des brevets

(11) **EP 2 086 256 B1**

(12) **EUROPÄISCHE PATENTSCHRIFT**

(45) Veröffentlichungstag und Bekanntmachung des Hinweises auf die Patenterteilung:
**14.11.2012 Patentblatt 2012/46**

(21) Anmeldenummer: **09100066.1**

(22) Anmeldetag: **23.01.2009**

(51) Int Cl.:
*H04W 16/04* *(2009.01)*    *H04W 28/04* *(2009.01)*
*H04W 28/16* *(2009.01)*

(54) **Verfahren zum optimierten Zuteilen von Ressourcenanforderungen an eine Vielzahl von Zellen eines zellularen Netzes**

Method for optimum allocation of resource requirements to a number of cells of a cellular network

Procédé d'attribution optimisée de demandes de ressources à une multitude de cellules d'un réseau cellulaire

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **30.01.2008 DE 102008006794**

(43) Veröffentlichungstag der Anmeldung:
**05.08.2009 Patentblatt 2009/32**

(73) Patentinhaber: **Deutsche Telekom AG**
**53113 Bonn (DE)**

(72) Erfinder:
• **Gaspard, Ingo**
**64372, Ober-Ramstadt (DE)**
• **Hasselbach, Philipp**
**35578 Wetzlar (DE)**
• **Klein, Anja**
**64287, Darmstadt (DE)**

(74) Vertreter: **Blumbach - Zinngrebe**
**Patentanwälte**
**Alexandrastrasse 5**
**65187 Wiesbaden (DE)**

(56) Entgegenhaltungen:
**EP-A- 0 986 194     US-A1- 2006 246 917**

**Beschreibung**

Die Erfindung betrifft ein Verfahren zum optimierten Ver- oder Zuteilen von Ressourcenanforderungen an eine Vielzahl von Zellen eines zellularen Netzes, insbesondere eines zellularen Mobilfunknetzes, unter Berücksichtigung einer gegebenen Anzahl an verfügbaren Ressourcen.

In Mobilfunknetzen ist die Anzahl verfügbarer Ressourcen, die den Zellen des Mobilfunknetzes zugewiesen werden können, begrenzt. Bekannt ist es, dass durch Verwendung derselben Ressourcen, beispielsweise Frequenzen, in verschiedenen Zellen eine hohe Systemkapazität erzielt werden kann. Die Wiederverwendung von Ressourcen in verschiedenen Zellen führt jedoch zu Störungen zwischen diesen Zellen, die auch als Gleichkanalstörung bezeichnet wird. Die Ressourcen werden deshalb unter Berücksichtigung eines minimalen räumlichen Abstands, der Wiederverwendungsabstand genannt wird, den Zellen zugewiesen. Der Wiederverwendungsabstand ist der Abstand zwischen zwei Zellen, denen dieselben Ressourcen zugewiesen werden. Ein derartiger zellularer Netzaufbau wird beispielsweise von K. David et al. in dem Fachbuch "Digitale Mobilfunksysteme, B.G. Teubner Stuttgart, 1996, Seiten 94 bis 100" beschrieben.

Die Europäische Patentanmeldung EP 0 986 194 offenbart ein zelluläres Kommunikationssystem, welches eine dynamische Zellenzuordnung einsetzt. Satelliten in der Erdumlaufbahn kommuniziert mit bodengestützten Kommunikations-Endgeräten über eine begrenzte Zahl von Frequenz-Kanäle. Zur Maximierung der Anzahl der gleichzeitigen Kommunikation, die untergebracht werden können, ist der effektive Service-Bereich in Zellen aufgeteilt. Die Position jeder Zelle relativ zu den nahe gelegenen Zellen wird hergestellt, um die Wiederverwendung der Zellen zu maximieren. Basierend auf der Kenntnis der Zellen Nachfrage sowie der Interzellen-Interferenz werden alle verfügbaren Kanäle in Gruppen angeordnet. Diese Gruppierung ermöglicht eine Präferenz für die Zuordnung von Kanälen auf bestimmte Zellgruppen. Wenn die Kommunikationsnachfrage in den Zellen schwankt und zusätzliche Kommunikationskanäle erforderlich sind, werden die Kanalbelegungspräferenzen abgefragt, um festzustellen, welche Kanäle den Zellen zuzuweisen sind.

Im Allgemeinen verschlechtert sich die Dienstequalität des Mobilfunknetzes, wenn einer Zelle wegen der begrenzten Anzahl verfügbarer Ressourcen nicht genügend Ressourcen zugewiesen werden können.

Der Erfindung liegt die Aufgabe zugrunde, ein Verfahren bereitzustellen, mit welchem ein Netzausfall minimiert oder sogar gänzlich vermieden werden kann.

Ein Kerngedanke der Erfindung ist darin zu sehen, dass die Zellen eines zellularen Netzes in mehrere Zellengruppen unterteilt werden, wobei die Mittelpunkte der Zellen jeder Zellenguppe einen Abstand zueinander aufweisen, der vorzugsweise kleiner ist als der Abstand eines verwendeten Wiederverwendungsabstands. Vor der eigentlichen Zuweisung von Ressourcen an Zellen, im Falle eines zellularen Mobilfunknetzes an die Basisstationen der Zellen, wird die ursprüngliche Anzahl an Ressourcenanforderungen jeder Zelle ermittelt. Unter Berücksichtigung einer gegebenen Anzahl an verfügbaren Ressourcen wird dann geprüft, ob die ursprüngliche Anzahl an Ressourcenanforderungen einer Zelle oder mehrerer Zellen verändert werden soll. Unter dem Ausdruck "Anzahl an Ressourcenanforderungen einer Zelle" ist die Anzahl von Ressourcen zu verstehen, die diese Zelle angefordert hat.

Das oben genannte technische Problem löst die Erfindung mit den Verfahrensschritten des Anspruchs 1.

Danach ist ein Verfahren zum optimierten Zuteilen von Ressourcenanforderungen an eine Vielzahl von Zellen eines zellularen Netzes unter Berücksichtigung einer gegebenen Anzahl an verfügbaren Ressourcen vorgesehen. Jede Zelle des Netzes fordert nunmehr eine Anzahl an Ressourcen an. Weiterhin wird eine Mehrzahl von Zellengruppen unter Verwendung eines vorbestimmten Wiederverwendungsabstandes gebildet. Der Wiederverwendungsabstand gibt den Abstand zwischen zwei Zellen innerhalb des zellularen Netzes an, in denen dieselben Ressourcen wiederverwendet werden können.

Für jede Zellengruppe wird die Gesamtanzahl an Ressourcen, die die Zellen der jeweiligen Zellengruppe angefordert haben, ermittelt. Weiterhin werden die Zellengruppen ermittelt, deren Gesamtanzahl an angeforderten Ressourcen größer ist als die gegebene Anzahl an verfügbaren Ressourcen. Unter dem Ausdruck "Gesamtanzahl an angeforderten Ressourcen einer Zellengruppe" ist die Summe der Ressourcenanforderungen aller Zellen, die zu der jeweiligen Zellengruppe gehören, zu verstehen. Für jede ermittelte Zellengruppe wird die ermittelte Gesamtanzahl angeforderter Ressourcen solange reduziert, bis die gegebene Anzahl an verfügbaren Ressourcen nicht mehr überschritten wird. Anschließend werden die Ressourcenanforderungen an die Zellen der jeweils ermittelten Zellengruppen in Abhängigkeit von der der jeweiligen Zellengruppe zugeordneten reduzierten Gesamtanzahl angeforderter Ressourcen verteilt. Auf diese Weise kann ein Netzausfall minimiert oder sogar verhindert werden. Denn das Verfahren stellt sicher, dass den Zellen einer Zellengruppe höchstens so viele Ressourcenanforderungen zugeteilt werden, wie verfügbare Ressourcen für das Netz bereitgestellt worden sind.

Die Struktur der Zellengruppen wird durch den gewählten Wiederverwendungsabstand festgelegt, welcher den Abstand zwischen zwei Zellen bestimmt, denen die gleichen Ressourcen zugewiesen werden.

Gemäß einer bevorzugten Ausführungsform ist der räumliche Abstand zwischen den Mittelpunkten jeder Zelle einer Zellengruppe kleiner als der vorbestimmte Wiederverwendungsabstand. Eine solche Zellengruppe ist **dadurch gekennzeichnet, dass** jede Zelle der Zellengruppe wenigstens eine direkte Nachbarzelle hat, die ebenfalls zu dieser Zellengruppe gehört. Demzufolge wird eine Zellengruppe nachfolgend auch als Nachbarschaftsgruppe bezeichnet. Der Wiederverwendungsabstand wird durch die Gleichung

$$D = \sqrt{3N} \ R$$

definiert, wobei N die Anzahl der Zellen einer Zellengruppe und R der Zellradius ist. Zumindest einige der Zellengruppen überlappen teilweise. Das bedeutet, dass verschiedene Zellengruppen wenigstens eine gemeinsame Zelle enthalten. Dadurch kann in besonders effizienter Weise eine optimale Zuteilung von Ressourcenanforderungen an die Zellen erfolgen.

Ein effizientes Verfahren ergibt sich dadurch, dass wenigstens eine Zelle ermittelt wird, die in mehreren Zellengruppen enthalten ist. Nunmehr wird wenigstens die Anzahl der von der wenigstens einen Zelle angeforderten Ressourcen solange reduziert, bis die Gesamtanzahl von angeforderten Ressourcen für die jeweilige Zellengruppe die gegebene Anzahl an verfügbaren Ressourcen nicht mehr überschreitet.

Zweckmäßigerweise werden nicht nur die Zellen, die in mehreren Zellengruppen enthalten sind, sondern auch die den jeweiligen Zellen zugeordnete Anzahl von Ressourcen, welche die jeweiligen Zellen angefordert haben, ermittelt. In Abhängigkeit von der für die jeweilige Zellengruppe ermittelte Gesamtanzahl an angeforderten Ressourcen kann nunmehr geprüft werden, ob die ermittelte Gesamtanzahl an angeforderten Ressourcen lediglich durch das Reduzieren der Anzahl der von der wenigstens einen Zelle angeforderten Ressourcen erzielt werden kann, oder ob die Anzahl einer zusätzlichen, in der Zellengruppe enthaltenen Zelle ebenfalls reduziert werden muss, damit die Gesamtanzahl an angeforderten Ressourcen für die jeweilige Zellengruppe die gegebene Anzahl an verfügbaren Ressourcen nicht mehr überschreitet.

Zweckmäßigerweise werden hierbei die Zellen ermittelt, die in den meisten Zellengruppen enthalten sind.

Angemerkt sei an dieser Stelle, dass das Verfahren zum optimierten Zuteilen von Ressourcenanforderungen iterativ, rekursiv oder nicht iterativ durchgeführt werden kann.

Vorteilhafter Weise handelt es sich bei dem zellularen Netz um ein zellulares Mobilfunknetz.

Zweckmäßigerweise wird das Verfahren in einer zentralen Einrichtung, beispielsweise in einer Vermittlungseinrichtung (MSC von Mobile Switching Center) oder in dezentralen Einrichtungen des zellularen Mobilfunknetzes ausgeführt. Bei den dezentralen Einrichtungen kann es sich beispielsweise um Basisstationen handeln, die innerhalb der Zellen aufgestellt sind. Diese Einrichtungen können jeweils einen Mikroprozessor aufweisen, der unter Steuerung eines in einem Speicher abgelegten Programms das beschriebene Verfahren ausführt.

Die Erfindung wird nachfolgend anhand eines Ausführungsbeispiels näher erläutert.

Es zeigen:

Fig. 1    eine Anordnung von Nachbarzellen eines zellularen Funknetzes unter Berücksichtigung eines Wiederverwendungsabstands von 3R,

Fig. 2    eine alternative Anordnung von Nachbarzellen bei einem Wiederverwendungsabstand von 2√3R,

Fig. 3    eine Nachbarschaftsgruppe bei einem Wiederverwendungsabstand von 3R,

Fig. 4    zwei mögliche Nachbarschaftsgruppen für einen Wiederverwendungsabstand von 2√3R,

Fig. 5    einen Ausschnitt eines beispielhaften zellularen Mobilfunknetzes, wobei die in den Zellen eingetragenen Zahlen die jeweilige Anzahl angeforderter Ressourcen darstellen,

Fig. 6    den in Fig. 5 gezeigten Ausschnitt eines Mobilfunknetzes ohne Angaben,

Fig. 7    den in Fig. 5 gezeigten Netzausschnitt mit einer optimierten Anforderungszuteilung von Ressourcen.

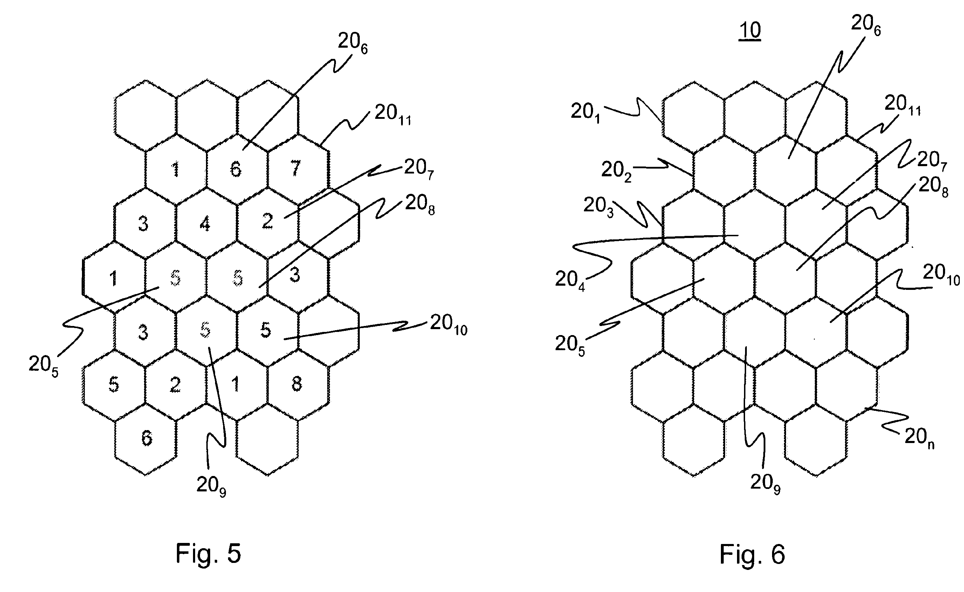

Figur 6 zeigt einen Ausschnitt eines zellularen Mobilfunknetzes 10, welches mehrere Zellen $20_1$ bis $20_n$ umfasst. Das in Fig. 6 gezeigte zellulare Mobilfunknetz 10 ist in sogenannte Nachbarschaftsgruppen unterteilt, wobei jede Nachbarschaftsgruppe eine Anzahl von N Zellen umfasst, deren Mittelpunkte jeweils einen räumlichen Abstand zueinander haben, der kleiner als der gewählte Wiederverwendungsabstand von 3R ist. Im vorliegenden Beispiel enthält jede Nachbarschaftsgruppe drei Nachbarzellen. Diese Beziehung steht in Zusammenhang mit dem Wiederverwendungsabstand, der durch die Gleichung

$$D = \sqrt{3N} \ R$$

definiert ist. Bei dem geschilderten Beispiel ist N = 3 und somit der Wiederverwendungsabstand gleich 3R.

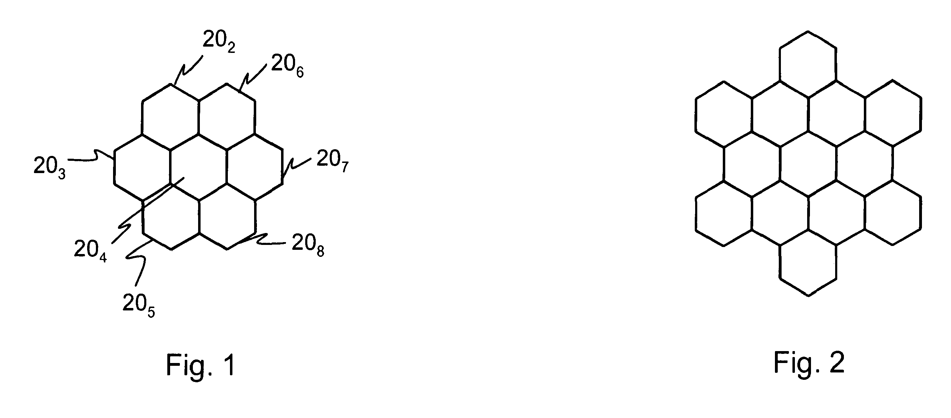

Angemerkt sei an dieser Stelle, dass zwei Zellen als Nachbarzellen bezeichnet werden, wenn ihre Mittelpunkte einen räumlichen Abstand zueinander haben, der kleiner ist als der Wiederverwendungsabstand, im vorliegenden Beispiel also kleiner ist als 3R. Die Nachbarzellen für die Nachbarzelle $20_4$ sind nach dieser Definition die Nachbarzellen $20_2$, $20_6$, $20_7$, $20_8$, $20_5$, $20_3$. Denn die Zellen $20_2$, $20_6$, $20_7$, $20_8$, $20_5$, $20_3$ weisen einen Abstand von der mittleren Nachbarschaftszelle $20_4$ auf, der kleiner ist als der Wiederverwendungsabstand 3R. Die Nachbarzellen der Nachbarzelle $20_4$ sind in Fig. 1 noch einmal gesondert dargestellt.

Fig. 1 zeigt ferner, dass die dargestellten Zellen insgesamt sechs Nachbarschaftsgruppen bilden. So bilden die Nachbarzellen $20_4$, $20_6$ und $20_7$ eine Nachbarschaftsgruppe, die Nachbarzellen $20_4$, $20_8$ und $20_5$, die Nachbarzellen $20_4$, $20_8$ und $20_7$, die Nachbarzellen $20_4$, $20_3$ und $20_5$, die Nachbarzellen $20_4$, $20_2$ und $20_3$ und die Nachbarzellen $20_4$, $20_2$ und $20_6$ jeweils eine weitere Nachbarschaftsgruppe. Aus der in Fig. 1 gezeigten Anordnung ergibt sich ferner, dass alle Nachbarschaftsgruppen zumindest die Zelle $20_4$ gemeinsam enthalten.

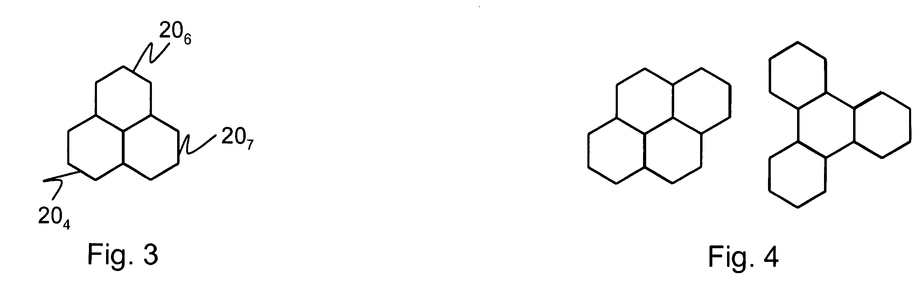

In Fig. 3 ist beispielsweise die Nachbarschaftsgruppe gesondert dargestellt, die die Nachbarschaftszellen $20_4$, $20_6$ und $20_7$ umfassen.

Angemerkt sei, dass je nach Implementierung des Netzwerkes auch kleinere oder größere Nachbarschaftsgruppen gebildet werden können.

So zeigt Fig. 4 alternativ zwei verschiedene Nachbarschaftsgruppen mit jeweils vier Nachbarschaftszellen bei einem gewählten Wiederverwendungsabstand von $2\sqrt{3}R$. Der Abstand der benachbarten Zellen in jeder Nachbarschaftsgruppe ist kleiner als der Wiederverwendungsabstand von $2\sqrt{3}R$.

Fig. 2 zeigt basierend auf den in Fig. 4 gezeigten Strukturen von Nachbarschaftsgruppen alle Nachbarzellen der Zelle $20_8$, welche einen Abstand zueinander aufweisen, der kleiner als der Wiederverwendungsabstand von $2\sqrt{3}R$ ist.

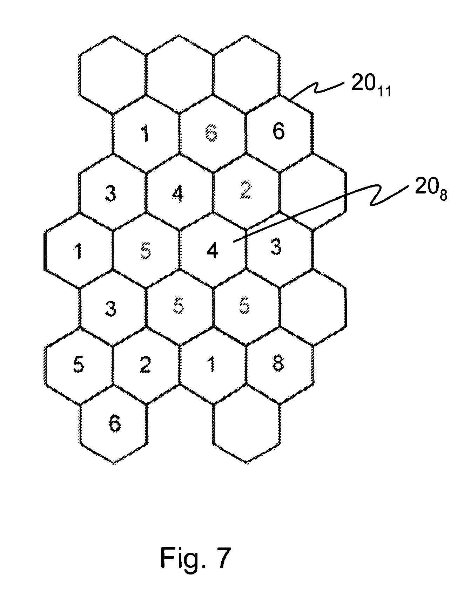

Die Wirkungsweise des Verfahrens wird nunmehr anhand der Fig. 5 bis 7 näher erläutert. Angenommen sei, dass das Verfahren von einer zentralen Einrichtung, zum Beispiel einer Vermittlungssteuerung (MSC), ausgeführt wird. Hierzu kann die Vermittlungssteuerung einen Mikroprozessor aufweisen, der unter Ansprechen auf die in einem Speicher abgelegten Programme das Verfahren ausführt. Die Vermittlungssteuerung kann weitere Speicher enthalten, in denen die Anzahl verfügbarer Ressourcen, die aktuelle Anzahl der Ressourcenanforderungen jeder Zelle und die Nachbarschaftsgruppen abgelegt sind.

Die in den Zellen der Fig. 5 eingetragenen Zahlen geben die Anzahl der von der jeweiligen Zelle angeforderten Ressourcen wieder. Als Ressourcen können beispielsweise Frequenzbänder, Codes oder Zeitschlitze angefordert werden. Für das vorliegende Beispiel wird angenommen, dass den Zellen Frequenzbänder zugewiesen werden sollen. Bei gleichzeitiger Betrachtung der Fig. 5 und 6 wird ersichtlich, dass die Zelle $20_2$ eine Ressource angefordert hat, die Zelle $20_6$ sechs Ressourcen angefordert hat, die Zelle $20_{11}$ sieben Ressourcen angefordert hat, usw. Weiterhin sei angenommen, dass für das in Fig. 6 dargestellte Mobilfunknetz 10 insgesamt vierzehn Ressourcen verfügbar sind.

Mit dem erfindungsgemäßen Verfahren kann nunmehr mittels des Mikroprozessors festgestellt werden, ob die von den Zellen angeforderten Ressourcen auch praktisch zugewiesen werden können, ohne einen Netzausfall zu verursachen. Dies wird dadurch erreicht, dass sichergestellt wird, dass die Summe der Ressourcenanforderungen aller Zellen, die zu einer Nachbarschaftsgruppe gehören, kleiner oder gleich ist der Anzahl der verfügbaren Ressourcen.

Bei Durchführung des Verfahrens wird nunmehr festgestellt, dass die eine Nachbarschaftsgruppe bildenden Zellen $20_{11}$, $20_6$ und $20_7$ insgesamt fünfzehn Ressourcen angefordert haben. Zudem ermittelt das Verfahren, dass die eine weitere Nachbarschaftsgruppe bildenden Zellen $20_5$, $20_9$ und $20_8$ insgesamt fünfzehn Ressourcen angefordert haben. Darüber stellt das Verfahren fest, dass die benachbarten Zellen $20_8$, $20_9$ und $20_{10}$, welche eine weitere Nachbarschaftsgruppe bilden, ebenfalls fünfzehn Ressourcen angefordert haben. Mit anderen Worten liegt die ermittelte Summe der Ressourcenanforderungen für jede der drei genannten Nachbarschaftsgruppen über der Anzahl verfügbarer Ressourcen. Die Summe der Ressourcenanforderungen der Zellen, die die übrigen Nachbarschaftsgruppe bilden, ist im vorliegenden Beispiel jeweils kleiner oder gleich der Anzahl verfügbarer Ressourcen.

Aufgabe des Algorithmus ist es nunmehr, für jede der drei Nachbarschaftsgruppen die ermittelte Gesamtanzahl an angeforderten Ressourcen derart zu reduzieren, dass maximal nur so viele Ressourcen von den zu der jeweiligen Nachbarschaftsgruppe gehörenden Zellen angefordert werden, dass die Anzahl der verfügbaren Ressourcen, das sind im vorliegenden Beispiel vierzehn, nicht überschritten wird.

Verschiedene Metriken sind denkbar, um die Anzahl angeforderter Ressourcen hinsichtlich einer Zelle zu reduzieren.

Ein Ausführungsbeispiel sieht vor, dass in einer Nachbarschaftsgruppe zunächst die Zelle gesucht wird, die ursprünglich die meisten Ressourcen angefordert hat. In der Nachbarschaftsgruppe, welche die Nachbarschaftszellen $20_6$, $20_7$ und $20_{11}$ enthält, ist dies die Zelle $20_{11}$, welche ursprünglich 7 Ressourcen angefordert hat. Anschließend wird die angeforderte Anzahl von sieben Ressourcen hinsichtlich der Zelle $20_{11}$ auf sechs reduziert, so dass die Gesamtanzahl aller angeforderten Ressourcen innerhalb dieser Nachbarschaftsgruppe nunmehr vierzehn ist und gleich der Anzahl der verfügbaren Ressourcen ist.

Ein weiterer beispielhafter Algorithmus kann berücksichtigen, dass zunächst die Zellen gesucht werden, die in mehreren Nachbarschaftsgruppen enthalten sind. In dem in Fig. 5 gezeigten Ausschnitt ist die Zelle $20_8$ in zwei Nachbarschaftsgruppen enthalten. Denn die Nachbarschaftszelle $20_8$ gehört sowohl zu der Nachbarschaftsgruppe, welche die Zellen $20_{10}$ und $20_9$ umfasst, als auch zu der Nachbarschaftsgruppe, die die Nachbarschaftszellen $20_5$ und $20_9$ umfasst. Selbstverständlich gehört auch die Nachbarschaftszelle $20_9$ diesen beiden Nachbarschaftsgruppen an. Gehören, wie im vorliegenden Beispiel, mehrere Zellen mehreren Nachbarschaftsgruppen an, so wird beispielsweise die Zelle zunächst betrachtet, die am meisten Ressourcen angefordert hat. Für den Fall, dass mehrere Zellen die gleiche maximale Anzahl an Ressourcen angefordert haben, wird eine Zelle willkürlich ausgewählt. Im vorliegenden Beispiel wird die Zelle $20_8$ zufällig ausgewählt. Anschließend wird die Anzahl der ursprünglich angeforderten Ressourcen hinsichtlich der Zelle $20_8$ um eins vermindert, so dass der Zelle $20_8$ nur noch vier Ressourcenanforderungen zugeteilt werden.

Das erläuterte Ausführungsbeispiel arbeitet sehr effizient, da durch die Reduktion der Anzahl ursprünglich angeforderter Ressourcen einer Zelle die Summe der Anzahl an angeforderten Ressourcen mehrerer Nachbarschaftsgruppen in einem einzigen Schritt reduziert werden kann, derart, dass die reduzierte Gesamtanzahl an angeforderten Ressourcen für die jeweiligen Nachbarschaftsgruppen kleiner oder gleich der Anzahl verfügbarer Ressourcen ist.

Dadurch, dass überlappende Nachbarschaftsgruppen gebildet werden, das heißt Gruppen, die wenigstens eine Zelle gemeinsam haben, kann in effizienter Weise eine optimale Zuteilung von Ressourcenanforderungen an Zellen unter Berücksichtigung der tatsächlich verfügbaren Ressourcen vorgenommen werden, um Netzausfälle minimieren oder sogar gänzlich vermeiden zu können.

**Patentansprüche**

1. Verfahren zum optimierten Zuteilen von Ressourcenanforderungen an eine Vielzahl von Zellen ($20_1$ bis $20_n$) eines zellularen Netzes (10) unter Berücksichtigung einer gegebenen Anzahl an verfügbaren Ressourcen, mit folgenden Schritten:

a) Anfordern, durch jede Zelle, einer Anzahl an Ressourcen;
b) Bilden einer Mehrzahl von Zellengruppen ($20_8$, $20_9$, $20_{10}$; $20_5$, $20_8$, $20_9$) unter Verwendung eines vorbestimmten Wiederverwendungsabstands; wobei jede Zellengruppe ($20_8$, $20_9$, $20_{10}$ ; $20_5$, $20_8$, $20_9$) mehrere Zellen umfasst, sich wenigstens einige der Zellengruppen ($20_8$, $20_9$, $20_{10}$ ; $20_5$, $20_8$, $20_9$) teilweise überlappen und dass der räumliche Abstand zwischen jeder Zelle einer Zellengruppe ($20_8$, $20_9$, $20_{10}$ ; $20_5$, $20_8$, $20_9$) kleiner als der vorbestimmte Wiederverwendungsabstand ist;
c) Ermitteln, für jede Zellengruppe ($20_8$, $20_9$, $20_{10}$ ; $20_5$, $20_8$, $20_9$), der Gesamtanzahl an Ressourcen, die die Zellen der jeweiligen Zellengruppe ($20_8$, $20_9$, $20_{10}$ ; $20_5$, $20_8$, $20_9$) angefordert haben;
d) Ermitteln der Zellengruppen ($20_8$, $20_9$, $20_{10}$; $20_5$, $20_8$, $20_9$), deren Gesamtanzahl an angeforderten Ressourcen größer ist als die gegebene Anzahl an verfügbaren Ressourcen;
e) Reduzieren, für jede in Schritt d) ermittelte Zellengruppe ($20_8$, $20_9$, $20_{10}$; $20_5$, $20_8$, $20_9$), der Gesamtanzahl angeforderter Ressourcen, durch folgende Schritte:

Ermitteln der wenigstens einen Zelle, die in mehreren Zellengruppen ($20_8$, $20_9$, $20_{10}$ ; $20_5$, $20_8$, $20_9$) enthalten ist;
Reduzieren der Anzahl der von der wenigstens einen Zelle angeforderten Ressourcen solange, bis die Gesamtanzahl an angeforderten Ressourcen für die jeweilige Zellengruppe ($20_8$, $20_9$, $20_{10}$ ; $20_5$, $20_8$, $20_9$) die gegebene Anzahl an verfügbaren Ressourcen nicht mehr überschreitet; und

f) Zuteilen der Ressourcenanforderungen an die Zellen ($20_8$, $20_9$, $20_{10}$; $20_5$, $20_8$, $20_9$) jeder in Schritt d) ermittelten Zellengruppe ($20_8$, $20_9$, $20_{10}$ ; $20_5$, $20_8$, $20_9$) in Abhängigkeit von der der jeweiligen Zellengruppe ($20_8$, $20_9$, $20_{10}$ ; $20_5$, $20_8$, $20_9$) zugeordneten reduzierten Gesamtanzahl angeforderter Ressourcen.

2. Verfahren nach Anspruch 1, **dadurch gekennzeichnet, dass** die Zelle oder die Zellen ermittelt werden, die in den meisten Zellengruppen ($20_8$, $20_9$, $20_{10}$ ; $20_5$, $20_8$, $20_9$) enthalten sind.

3. Verfahren nach einem der Ansprüche 1 oder 2, **dadurch gekennzeichnet, dass** das Verfahren in einer zentralen Einrichtung oder in dezentralen Einrichtungen des zellularen Netzes ausgeführt wird.

**Claims**

1. A method for optimum allocation of resource requirements to a plurality of cells ($20_1$ to $20_n$) of a cellular network (10), considering a given number of available resources, the method comprising the following steps:

a) each cell requesting a number of resources;
b) forming a plurality of cell groups ($20_8$, $20_9$, $20_{10}$; $20_5$, $20_8$, $20_9$) using a predefined reuse interval; wherein each cell group ($20_8$, $20_9$, $20_{10}$; $20_5$, $20_8$, $20_9$) comprises multiple cells and at least some of the cell groups ($20_8$, $20_9$, $20_{10}$; $20_5$, $20_8$, $20_9$) overlap in part, and the spatial distance between each cell of the cell group ($20_8$, $20_9$, $20_{10}$; $20_5$, $20_8$, $20_9$) is smaller than the predefined reuse interval;
c) determining, for each cell group ($20_8$, $20_9$, $20_{10}$; $20_5$, $20_8$, $20_9$), the total number of resources that have been requested by the cells of the respective cell group ($20_8$, $20_9$, $20_{10}$; $20_5$, $20_8$, $20_9$);
d) determining the cell groups ($20_8$, $20_9$, $20_{10}$; $20_5$, $20_8$, $20_9$), whose total number of requested resources is larger than the given number of available resources;

e) reducing, for each cell group ($20_8$, $20_9$, $20_{10}$; $20_5$, $20_8$, $20_9$) determined in step d), the total number of requested resources by means of the following steps:

> determining the at least one cell that is contained in multiple cell groups ($20_8$, $20_9$, $20_{10}$; $20_5$, $20_8$, $20_9$);
>
> reducing the number of resources requested by the at least one cell until the total number of resources requested for the respective cell group ($20_8$, $20_9$, $20_{10}$; $20_5$, $20_8$, $20_9$) no longer exceeds the given number of available resources; and

f) assigning the resource requirements to the cells ($20_8$, $20_9$, $20_{10}$; $20_5$, $20_8$, $20_9$) of each cell group ($20_8$, $20_9$, $20_{10}$; $20_5$, $20_8$, $20_9$) determined in step d) as a function of the reduced total number of requested resources assigned to the respective cell group ($20_8$, $20_9$, $20_{10}$; $20_5$, $20_8$, $20_9$).

**2.** The method according to claim 1, **characterised in that** the cell or the cells is/are determined that is/are contained in most of the cell groups ($20_8$, $20_9$, $20_{10}$; $20_5$, $20_8$, $20_9$).

**3.** The method according to any one of claims 1 or 2, **characterised in that** the method is carried out in a central device or in decentralised devices of the cellular network.

**Revendications**

**1.** Procédé d'attribution optimisée de demandes de ressources à une multitude de cellules ($20_1$ à $20_n$) d'un réseau cellulaire (10) en prenant en compte un nombre donné de ressources disponibles, comprenant les étapes suivantes :

> a) demande, par chaque cellule, d'un nombre de ressources ;
> b) constitution d'une pluralité de groupes de cellules ($20_8$, $20_9$, $20_{10}$; $20_5$, $20_8$, $20_9$) en utilisant une distance de réutilisation prédéterminée ; chaque groupe de cellules ($20_8$, $20_9$, $20_{10}$; $20_5$, $20_8$, $20_9$) comprenant plusieurs cellules, certains groupes de cellules ($20_8$, $20_9$, $20_{10}$; $20_5$, $20_8$, $20_9$) au moins se chevauchant partiellement et la distance spatiale entre chaque cellule d'un groupe de cellules ($20_8$, $20_9$, $20_{10}$; $20_5$, $20_8$, $20_9$) étant plus petite que la distance de réutilisation prédéterminée ;
> c) détermination, pour chaque groupe de cellules ($20_8$, $20_9$, $20_{10}$, $20_5$, $20_8$, $20_9$), du nombre

total de ressources demandées par les cellules du groupe de cellules ($20_8$, $20_9$, $20_{10}$, $20_5$, $20_8$, $20_9$) respectif ;

d) détermination des groupes de cellules ($20_8$, $20_9$, $20_{10}$; $20_5$, $20_8$, $20_9$) dont le nombre total de ressources demandées est plus grand que le nombre donné de ressources disponibles ;

e) diminution, pour chaque groupe de cellules ($20_8$, $20_9$, $20_{10}$, $20_5$, $20_8$, $20_9$) déterminé à l'étape d), du nombre total de ressources demandées, selon les étapes suivantes :

> détection de la au moins une cellule contenue dans plusieurs groupes de cellules ($20_8$, $20_9$, $20_{10}$; $20_5$, $20_8$, $20_9$) ;
>
> diminution du nombre des ressources demandées par la au moins une cellule jusqu'à ce que le nombre total de ressources demandées pour le groupe de cellules ($20_8$, $20_9$, $20_{10}$; $20_5$, $20_8$, $20_9$) respectif ne dépasse plus le nombre donné de ressources disponibles ; et

f) attribution des demandes de ressources aux cellules ($20_8$, $20_9$, $20_{10}$; $20_5$, $20_8$, $20_9$) de chacun des groupes de cellules ($20_8$, $20_9$, $20_{10}$, $20_5$, $20_8$, $20_9$) déterminés à l'étape d) en fonction du nombre total réduit de ressources demandées attribué au groupe de cellules ($20_8$, $20_9$, $20_{10}$; $20_5$, $20_8$, $20_9$) respectif.

**2.** Procédé selon la revendication 1, **caractérisé en ce que** la cellule ou les cellules contenues dans la plupart des groupes de cellules ($20_8$, $20_9$, $20_{10}$; $20_5$, $20_8$, $20_9$) sont déterminées.

**3.** Procédé selon l'une des revendications 1 ou 2, **caractérisé en ce que** le procédé est mis en oeuvre dans un équipement centralisé ou dans des équipements décentralisés d'un réseau cellulaire.

Fig. 2

Fig. 1

Fig. 4

Fig. 3

$20_6$

$20_7$

$20_4$

Fig. 5

Fig. 6

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

• EP 0986194 A

**In der Beschreibung aufgeführte Nicht-Patentliteratur**

• **K. DAVID et al.** Digitale Mobilfunksysteme. 1996, 94-100